# EUROPEAN PATENT APPLICATION

(11) **EP 4 385 877 A1**
(43) Date of publication of application: **19.06.2024**
(21) Application number: 22213559.2
(22) Date of filing: 14.12.2022
(51) Int. Cl.: B63B 22/24, F03D 13/25, F03D 80/80, H02G 9/12

(54) **TEMPORARY FLOATING CONNECTION ASSEMBLY**

(71) Applicant: Delta Wind Partners ApS, 8600 Silkeborg (DK)
(72) Inventor: JACOBSEN, Simon Rasmus, 8600 Silkeborg (DK)
(74) Representative: Dragsted Partners A/S

(57) **Abstract**

The present invention relates to a temporary floating connection assembly for disconnecting and storing a part of a power and data cable of at least one offshore energy converter device, the connection assembly comprising a buoyancy body configured to float on a surface of a body of water (where a top part is above the surface of the body water and a bottom part below the surface of the body of water), a cable configured to providing power communication and data communication for the offshore energy converter, the cable having a first part configured to be connected to the offshore energy converter device and a second end configured to be submerged in the body of water, a first connection arrangement for the electric cable, where the connection arrangement in a first state is configured to secure a first end of the cable to the buoyancy body, and in a second state is configured to release the first end of the cable from the buoyancy body. Moreover, the present invention also relates to a method of disconnecting an offshore energy converter device having a first position in a body of water.

## Description

### Technical Field

The present invention relates to a temporary floating connection assembly for disconnecting and storing a part of a power and data cable of at least one offshore energy converter device. Moreover, the present invention also relates to a method of disconnecting an offshore energy converter device having a first position in a body of water.

### Description

Offshore energy converter devices are often used for the production of energy from a renewable energy source, where the converter device is used to convert wind energy and/or wave energy to electricity. There exists a number of different offshore energy converter devices. Some of these devices are permanent installations and others are provided in the form of floating platforms positioned in clusters on a body of water. The floating platforms may e.g. be provided with a wind turbine, where a plurality of floating platforms are positioned in a predefined pattern in a predefined area of the body of water, such as in the ocean, each floating platform being configured to produce electricity.

Each floating platform is connected to a power grid or a power system, where the produced electricity is fed from the platform or the offshore energy converter device via a cable to a power system. The cable is often submerged in the body of water, with one end of the cable being connected to the offshore energy converter device, and where the opposite end of the cable may be connected to the power grid. The cable may also be utilised to provide data to and from the offshore energy converter device.

However, in the case where the offshore energy converter device is a floating platform, there may be a need to perform maintenance of certain parts of the floating platform, such as the wind turbine or other parts of the support structure for the wind turbine. The platform may be positioned a predefined distance from the shore, which means that performing maintenance to the platform in its position in the cluster may be very difficult, and may require equipment having to be brought to the platform in its offshore position. This may be very problematic, as the weather conditions in the offshore positions may be precarious and at certain wind speeds or wave height, the maintenance crews will not be able to operate in the offshore position. Thus, in order to improve the conditions for the maintenance crews, the floating platform may be towed towards the shore or into a harbour, where it may be much easier to gain access to maintenance equipment and the adverse effects of the weather conditions, such as the wave height, are reduced significantly inside a harbour. However, currently there are challenges having to be solved in order to disconnect the floating platform, tow it towards the shore, perform maintenance, tow it back into its position and to reconnect the floating platform to the cable which transmits the electricity from the platform. The floating platform is kept in its position using mooring lines anchored at the seabed, so that the mooring lines have to be released from the platform along with the cable for the platform to be free to be towed to another position. Traditionally, the mooring lines and the cable are released from the floating platform, and the lines and cable are arranged to descent to the seabed. When the platform is to be reconnected, an underwater ROV (Remotely Operated Vehicle) is used to locate the mooring lines and the cable and to assist in bringing the cable and lines back towards the floating platform.

The presence of a ROV is relatively expensive, which means that the reconnecting of the floating platform may be expensive, and the process may be time consuming as the lines and the cables have to be brought up towards the surface of the body of water before the lines and the cables are connected to the platform and the offshore energy converter device. One solution to this problem has been disclosed in US 2020/0001946, in which it is disclosed that there may be provided a floating connector of an offshore energy device and that a method for connecting the floating connector is provided, where the floating connector includes a buoy having a tube, a bay, a joint box and at least one cable for connecting to the offshore energy device. Thus, the cable connector may include a flotation device permanently connected to the cable, so that when the cable is released, the floating body ensures that the cable connector does not sink towards the seabed. However, this means that the connector is very bulky, and as the floating body of the connector is permanently attached to the cable, and when the cable is connected to the platform the cable connector and the floating body are exposed to the weather conditions of the platform, and takes up a lot of space on the platform Thus, it may be very difficult to check and ensure that the floating body of the connector is operational when it is needed, as the entire cable has to be released from the platform to check its condition. This may mean that if the floating body is not intact, the cable may sink immediately when released from the platform, or may gradually lose its buoyancy and sink with time. Thus, an ROV has to be provided to salvage the connector and reattach it to the platform.

It is the purpose of the present disclosure to present a solution to this problem, where a temporary floating connection assembly is provided for disconnecting and storing a part of a power and data cable of at least one offshore energy converter device, the connection assembly comprising: a buoyancy body configured to float on a surface of a body of water (where a top part is above the surface of the body water and a bottom part below the surface of the body of water), a cable configured to providing power communication and data communication for the offshore energy converter, the cable having a first part configured to be connected to the offshore energy converter device and a second end configured to be submerged in the body of water, a first connection arrangement for the electric cable, where the connection arrangement in a first state is configured to secure a first end of the cable to the buoyancy body, and in a second state is configured to release the first end of the cable from the buoyancy body. Thus, a temporary floating connection assembly may be transported from a maintenance vessel and onto the floating platform, where the first end of the cable may be disconnected from the energy converter and connected to the buoyancy body. When the cable is connected to the buoyancy body, the buoyancy body may be manoeuvred towards the surface of the body of water, where the buoyancy body will ensure that the first end of the cable will not sink towards the seabed. Thus, the floating platform has been disconnected from the power grid and may be towed to harbour for maintenance or other purposes. When maintenance is concluded, the platform may be repositioned in its correct position, the buoyancy body may be transported back to the platform, and the cable may be disconnected from the buoyancy body and reconnected to the energy converter device. Subsequently, the buoyancy body may be transferred to the maintenance vessel and removed from the position of the floating platform, and the buoyancy body may be utilised for another platform or brought ashore for maintenance and verification of its proper functionality.

In this way, the disconnecting and connecting of an energy converter device may be performed effectively, and the equipment necessary to effectively disconnect and connect the energy converter may be reused for a second energy converter device. Thus, with the provision of a temporary and reusable connection assembly, it may be cheaper to perform a connection and disconnection of an energy converter device, as one connection assembly may be utilised for a plurality of energy converters, where one connection assembly is utilised for one energy converter at a time, and where the connection assembly may be utilised for a second energy converter subsequent to the reconnection of the first energy converter.

In one exemplary embodiment, the electric cable comprises at least one connector, the connector being configured to a mating connection on the offshore energy converter device. By providing an electric cable which comprises at least one connector, the electric cable may easily be connected and disconnected from the energy converter device, and it may be possible to pull the connector from its mating connection in the energy converter device. Thus, the disconnecting and the connecting of the cable from and to the energy converter device may be performed easily without the need of manually installing the wire to a junction box on the energy converter device.

In one exemplary embodiment, the connection assembly may comprise an electrical cable connection part, where the electrical connection part is configured to mate with the connector of the cable. Thus, when the connector has been removed from its mating connection on the energy converter device, the connector may be transferred and/or transported to the connection assembly, where the connector may be inserted in the electrical cable connection part.

In one exemplary embodiment, the at least one connector may have a waterproof housing where the electrical connectors of the connector provided with a hermetical and/or waterproof seal to protect the electrical connectors from corrosion or contamination by the fluids of the body of water. A common issue that occurs when a cable is disconnected from an energy converter device is that the cable is exposed after disconnecting. Thus, if the cable is submerged into the body of water, the water may penetrate the first end of the cable, and the penetration of the cable may continue along the longitudinal axis of the cable. Thus, when the cable is to be reconnected to the energy converter device, the first end of the cable may be damaged by water, which also means that the first end has to be cut off at a predetermined length, creating a new first end a predetermined distance away from the old first end. However, by providing a waterproof and/or a hermetical seal, the first end of the cable may be contained inside the connector, so that when the cable is submerged, the sealed connector may protect the first end from penetration of water so that the connector may be prepared to be directly connected to the energy converter device. The connector may be configured to ensure that water cannot penetrate the cable, thereby protecting the electrical and/or data conductors (transmission parts) of the cable.

In one exemplary embodiment, the buoyancy body comprises at least one hoisting connection. The hoisting connection may be arranged at a vertical top part of the buoyancy body, where the hoisting connection may be configured to be arranged above the surface of the body of water. Thus, when the buoyancy body is to be transported from the body of water and/or from a marine vessel to the offshore energy converter device, a crane may be connected to the hoisting connection, and the buoyancy body may be lifted out of the body of water or from the marine vessel and transported onto the offshore energy converter device to allow cables and/or mooring lines to be connected to and/or disconnected from the connection assembly. The hoisting connection may be in the form of a bolt with an opening, any form of rings, or shackles, where the hoisting connection may be mechanically attached to the buoyancy body, having an opening, where a hook of a hoisting crane (or similar) may be connected to the opening and a mechanical force may be applied to the buoyancy body from the hoisting crane in a upwards or downwards direction for lifting and lowering the buoyancy body and to move the buoyancy body from its initial position and to a subsequent position via the crane.

In one exemplary embodiment, the first end of the cable is positioned above the surface of the body of water in the first state. The buoyancy body may comprise a cable receiving part, where the cable receiving part is capable of holding the first end of the cable. The vertical positioning of the cable receiving part may be arranged above the surface of the body of water, so that when the first end of the cable is attached to the cable receiving part, the first end of the cable may be above the waterline. A cable is often arranged with a coating and/or a cover layer that is waterproof and leakproof, so that the fluid of the body of water cannot enter the cable in a direction through the coating or the cover layer. However, when the cable is released, the first end of the cable may provide access into the inner volume of the cable, so that if the first end is submerged, the fluid may enter the first end of the cable and penetrate the cable in a longitudinal direction towards the second end of the cable. By ensuring that the first end of the cable is above the waterline, the buoyancy body and/or the connection assembly may ensure that water cannot penetrate the first end of the cable. Furthermore, the cable receiving part of the buoyancy body may be arranged so that the buoyancy outer surface of the buoyancy body covers the first end, so that rain, snow, water spray and/or other offshore contaminants cannot come into contact with the first end of the cable. In one embodiment, the cable receiving part may be arranged at a lower part of the buoyancy body, the cable being threaded in an upwards direction towards an upper part of the buoyancy body, where a first part of the cable receiving part may be below a waterline, and a second part of the cable receiving part may be above the waterline when the buoyancy body is floating on the surface of the body of water. Thus, when the cable is inserted in the cable receiving part, and the buoyancy body is arranged on the water, the only part of the cable that is contact with the body of water is the outer cover/coating of the cable, while the first end is arranged in a dry position.

In one exemplary embodiment, the connection assembly comprises a second connection arrangement for at least one mooring line, where in a first state the at least one mooring line is secured to the buoyancy body, and in a second state the mooring line is released from the buoyancy body. A second end of the mooring line may be anchored to the seabed, while a first end of the mooring line may be attached to the second connection arrangement. The second connection arrangement may be attached to or be part of an outer surface of the buoyancy body, so that when the mooring line is attached to the buoyancy body, the mooring line extends from an outer surface of the buoyancy body towards the seabed. The mooring line may be used to anchor the connection assembly in the first position, so that the floating body maintains its position in the vicinity of the first position of the offshore energy converter device, when the offshore energy converter device is at its second position, such as in a harbour for maintenance.

In one exemplary embodiment, the connection assembly comprises at least one mooring line. The mooring line may be a line that anchors a floating offshore energy converter device in its first position in the body of water. The mooring line may be part of the temporary floating connection assembly, wherein in the first state the mooring line may be connected to the buoyancy body, and where the mooring line may anchor the buoyancy body in a similar position of the floating energy converter device, while the energy converter device has been transported away from its first position. In a second state, the connection arrangement may be configured to release the mooring lines, so that the mooring lines may be connected to an offshore floating energy converter to provide anchoring to the offshore floating energy converter.

In one exemplary embodiment, the electric cable has a second end connected to a power grid. The power grid may be in the form of any type of power grid that is capable of collecting energy created by the offshore energy converter device and transmitting the energy to an energy collecting part, such as a submerged cable connector, where the energy collecting part may be connected to a transformation device or other types of devices that allow the energy to be transmitted from an offshore position towards an onshore position to distribute the energy to a power grid or other types of energy distribution devices.

In one exemplary embodiment, the electric cable comprises one or more buoyancy devices arranged along the longitudinal extension of the cable in a position that is between a first end of the cable and a second end of the cable. The buoyancy devices may be arranged at one or more positions along the length of the cable, where the buoyancy bodies may be configured to reduce stress to the cable while submerged and to prevent that one or more parts of the cable are capable of sinking to the bottom. The buoyancy device may be configured to provide a buoyancy, where the cable and the buoyancy device are substantially at a neutral buoyancy, so that the cable will substantially maintain its vertical position in the body of water when the cable is submerged. The buoyancy device may thereby be utilised to reduce the force of gravity of the submerged cable when it is connected to the connection assembly and/or the offshore energy converter device.

The one or more buoyancy devices may be arranged at a position closer to the first end of the cable than to the second end of the cable. Thus, the buoyancy devices may ensure that there is minimal force of gravity applied to the first end of the cable.

The one or more buoyancy devices may be arranged at a distance from the first end of the cable, where the distance is between 2 and 100 m from the first end of the cable, or more preferably between 2 and 50 m from the first end of the cable, or more preferably between 2 and 20 m from the first end of the cable.

The cable may comprise two or more buoyancy devices, where the two or more buoyancy devices are arranged at a predefined distance from each other, where the predefined distance is equal to a predefined distance of a plurality of holding parts arranged at an outer periphery of the offshore energy converter. Thus, when the first end is attached to the energy converter device, the two or more buoyancy devices are attached to the two or more holding parts. Thus, the buoyancy device may be utilised as an attachment element for the cable to a peripheral part of the offshore energy converter device, thereby absorbing at least parts of the gravitational force of the cable and ensuring that the first end of the cable is isolated from the gravitational force that may provide a pulling force towards the seabed of the body of water.

The present disclosure also relates to a method of disconnecting an offshore energy converter device having a first position in a body of water, the method comprising the steps of: providing a buoyancy body on the surface of a body of water in the vicinity of the offshore energy converter device, disconnecting a first end of a cable from the offshore energy converter device, connecting the first end of the cable to the buoyancy body, towing the offshore energy converter device away from its first position to a second position. The method may be configured to provide a quick and effective way of disconnecting an offshore energy converter device, where a buoyancy body may be arranged in the body of water to hold a cable that connects the energy converter device to an energy collecting device, and where the offshore energy device may be transported from its first position to a second position, should this be needed. The buoyancy body holds the cable at or above the surface of the body of water, so that it may easily be retrieved when it is needed to reconnect the cable to the energy converter device, when it has been brought back to its position.

The first position and/or the second position may be a geographical position. The positions of the offshore energy converter device may be a geographical position, where the first position may e.g. be a position in a renewable energy park, and the second position may be a position where maintenance of the energy converter device may be performed, such as in a harbour or at a landlocked location where maintenance crews are less affected by weather conditions or conditions of the body of water, such as waves.

In one exemplary embodiment, the method may further comprise the step of towing the offshore energy converter device from its second position to its first position, and optionally disconnecting the first end of the cable from the buoyancy body and connecting the first end of the cable to the offshore energy converter device. Thus, the method may further comprise the step of moving the offshore energy converter device back to its original position, where the offshore energy converter device is capable of converting renewable energy to electric energy. Furthermore, the method may also include the steps of reconnecting the cable to the offshore energy converter device, allowing the converter to continue its job of converting one type of energy to electric energy, such as converting wind and/or wave energy to electric energy.

In one exemplary embodiment, the method may further comprise the step of removing the buoyancy body from the surface of the body of water in the vicinity of the offshore energy converter device. Thus, when the offshore energy converter device has arranged in its position, and the cable and/or mooring lines have been disconnected from the buoyancy body and connected to the offshore energy converted device, the buoyancy body may be hoisted away from the surface of the body of water into a marine vessel and may be transported towards the shore or to a subsequent energy converter device needing to be maintained. The step may alternatively be to hoist the buoyancy body from the energy converter device, as the disconnecting of the cables and/or mooring lines may be performed on the floating platform. Alternatively, the buoyancy body may be hoisted on/or onto the offshore energy converter device, where the cables are disconnected, and where the buoyancy body may be stored aboard the offshore energy converter device, or may be hoisted from the offshore energy converter device and onto a marine vessel. Thus, the step does not necessarily have to include that the buoyancy body is hoisted from the surface of the body of water.

In one exemplary embodiment, the method may further comprise the step of disconnecting one or more mooring lines from the offshore energy converter device and connecting the one or more mooring lines to the buoyancy body, and optionally disconnecting the one or more mooring lines from the buoyancy body and connecting the one or more mooring lines to the energy converter device. Thus, the method may include the disconnecting and connecting of mooring lines, where the mooring lines may be used to anchor the offshore energy converter device in its first position, or may be used to anchor the buoyancy body in its position. The buoyancy body may already be floating on the surface of the water when the mooring lines are connected and/or disconnected from the energy converter device.

### Brief description of the drawings

The following is an explanation of exemplary embodiments with reference to the drawings, in which:
Fig. 1 is a schematical view of an offshore energy converter device floating on a body of water, seen in perspective,
Fig. 2 is a side schematical view of an offshore energy converter device in its first position,
Fig. 3 is a side schematical view of an offshore energy converter device being prepared to being disconnected,
Fig. 4 is a side schematical view of a disconnected offshore energy converter device being transported from its first position, where a temporary floating connection assembly has been connected to the mooring lines and cable, and
Fig. 5 is a side schematical view of an offshore energy converter device having a coupling assembly for a cable.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

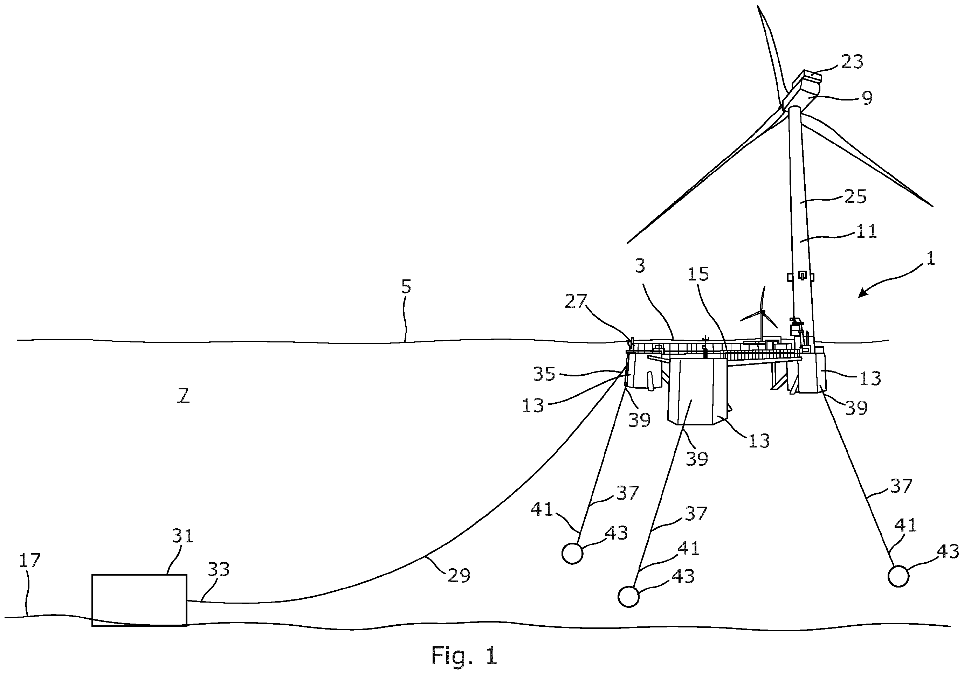

Fig. 1 shows a schematical perspective view of a floating energy converter device 1, floating in a body of water 7, where the body of water has a surface 5 and a seabed 17. The energy converter device 1 may be a device having a wind turbine 9, where the wind turbine 9 extends from a floating platform 3 via a via a tower 11. The platform 3 may comprise one or more pontoons 13, where in this example the platform 3 comprises three pontoons 13 connected to each other via a gangway 15 and a bracing (not shown) which is submerged. The platform may be a barge (where a majority of the platform is above the surface 5 of the body of water), or may be a semi-submersible, as shown in this embodiment, where one of the pontoons 13 is connected with the wind turbine tower 11.

The energy converter device 1 may be part of a larger installation, such as a wind park, where a plurality of energy converter devices 1 are positioned at different positions in an offshore area, where each energy converter device 1 may be arranged to fulfil a pattern which maximises the energy conversion rate of the energy converter devices in the park.

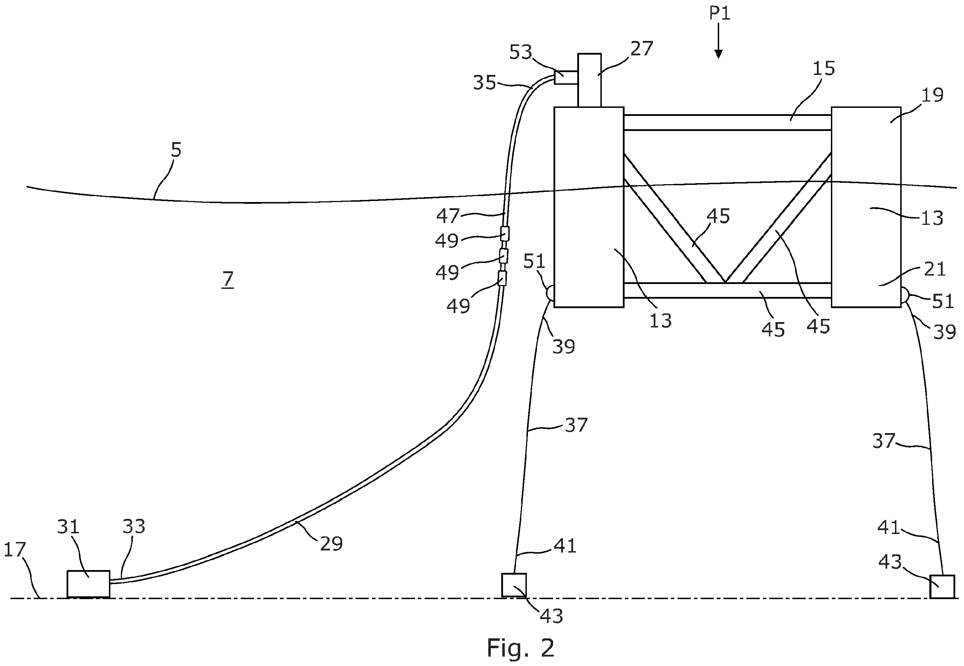

The energy converter device 1 may be a floating platform 3, which means that the platform has a buoyancy ensuring that an upper part 19 of the platform 3 extends in a vertical direction above the water surface 5, while a lower part 21 (shown in Fig. 2) is submerged in a vertical direction below the surface 5 of the water. The pontoons may be provided with counterweights, in order to ensure that the platform is balanced at any time relative to the wind turbine 9. The counterweights may be in the form of ballast tanks in the pontoons, or fixed counterweights that provide a constant counterbalance to the wind turbine 9. In other embodiments, the energy converter device 1 may be provided with a different type of energy converter, such as wave energy converter, or other types of energy converters that function in an offshore position.

The energy converter device 1 may have an energy converter 23, which may have an electrical transmission part 25 extending from the energy converter 23 and to a predefined position on the platform 3, where it may terminate at an electric connection junction 27. The electric connection junction 27 may be utilised to connect the energy converter device with an electric cable and/or a data transport cable 29, which extends from the platform 3 and towards an submerged electric junction 31 arranged on the seabed 17, which allows the energy converter device 1 to be connected to a power grid (not shown) or an energy distribution network (not shown) configured to collect the electric energy manufactured by the energy converter devices 1 in the park and transport it onwards for introduction into an onshore power grid (not shown).

The cable 29 may extend within the body of water from the submerged electric junction 31 and towards the platform 3, where a second end 33 of the cable 29 may be connected to the submerged electric junction 31, and a first end 35 of the cable 29 may be connected to the electric connection junction 27 of the platform 3. The cable 29 may have a length suitable for the depth of the body of water where the energy converter device 1 is positioned, where the length of the cable is often significantly longer than what is necessary in order to have an overcapacity of cable 29, should a first end 35 or the second end 33 of the cable be damaged. This allows maintenance crews to shorten the cable 29 without having to install a new cable 29. This is often necessary in situations where the cable 29 has to be released from the energy converter device 1, and where the cable sinks towards the seabed 17.

The energy converter device 1 may have a floating platform 3, where the floating platform has to be provided with means to maintain the geographical position of the floating platform 3 on or in the body of water 7. This may be done in different ways, and the platform may be provided with propelling devices that may constantly maintain its geographical position, however, in this embodiment the platform 3 may be provided with mooring lines 37, that have a first end 39 connected to the platform 3 and a second end 41 anchored to the seabed 17 via anchoring devices 43 or other forms of securing the second end 41 of the mooring line 37 to the seabed 17. The mooring lines 37 ensure that the energy converter device maintains its substantial geographical position for energy conversion in any weather and where wind and waves cannot push the energy converter device 1 from its predefined geographical position. The term first position, second position, or geographical position may be a substantial geographical position and may have a predefined radius of movement, allowing the energy converter device to move a predefined distance from the position without changing its substantial geographical position.

Fig. 2 shows a schematic side view of a platform 3 of an energy converter device 1 as shown in Fig. 1, where the scale of the illustration is adjusted to illustrate the concepts of the present disclosure. The platform 3 may be floating in a body of water 7, where an upper part 19 of the pontoons 13 extends above the water surface 5 while a lower part 21 of the pontoons 13 is submerged below the water surface 5, the gangway 15 and the bracing 45 connecting the pontoons 13 to create a stable platform 3.

The connection junction 27 may be in a position above the surface 5 of the water 7 on the platform 3, as shown in this embodiment, but may also be arranged below the surface 5 of the water 7 in a submerged position. The second end 33 of the electric cable 29 is connected to the submerged electric junction 31, the body 47 of the cable 29 extending towards the first end 35, which may be connected to the connection junction 27 of the electric converter device 1, providing electric and data communication between the submerged electric junction 31 and the connection junction 27. The body 47 of the cable 29 may be provided with one or more buoyancy devices 49, where the buoyancy device 49 may be configured to provide a buoyancy where the cable 29 and the buoyancy device 49 are substantially at a neutral buoyancy, so that the cable will substantially maintain its vertical position in the body of water 7 when the cable 29 is submerged.

The mooring lines 37 may extend from the lower part 21 of the platform 3 and/or the pontoons 13, where the first end 39 of the mooring lines 37 may be releasably attached to a connecting part 51 on the platform 3, the second end 41 being connected to an anchoring device 43.

The cable 29 may be connected to the connection junction 27 via a cable connector 53 attached to the first end 35 of the cable 29 and may be connected to the junction via a plug and socket connection, where the connector 53 comprises a male connection and the connection junction comprises a female connector (or vice versa), or where the first end 35 of the cable may be wired directly to the connection junction 27.

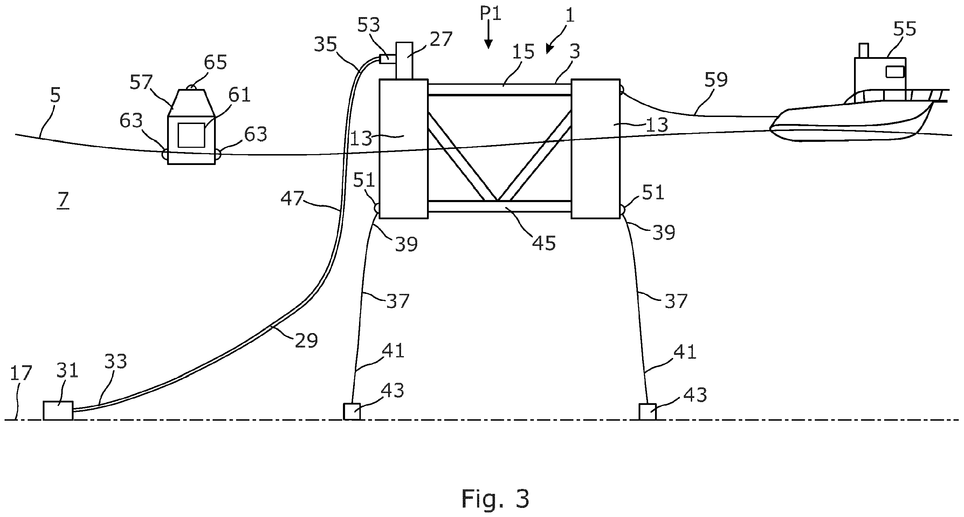

Fig. 3 shows a schematic side view of a situation where the energy converter device 1 is being prepared for maintenance, where a marine vessel 55 approaches the first position of the energy converter device 1, and in a first step delivers a buoyancy body 57 to the surface 5 of the water 7, and in a second step connects the platform 3 via a towing line 59 to the marine vessel 55. The buoyancy body 57 may be part of a temporary floating connection assembly configured to allow the disconnect of the energy converter device 1 from the cable 29 and/or the mooring lines 37 allowing the cable 29 and/or lines 37 to be stored in connection with the buoyancy body 57 in order to make it easier to connect and disconnect the energy converter device 1 from the seabed. Alternatively, the buoyancy body 57 may be delivered to an upper part of the platform 3, so that the buoyancy body is hoisted onto the platform prior to the disconnecting of the cable 29.

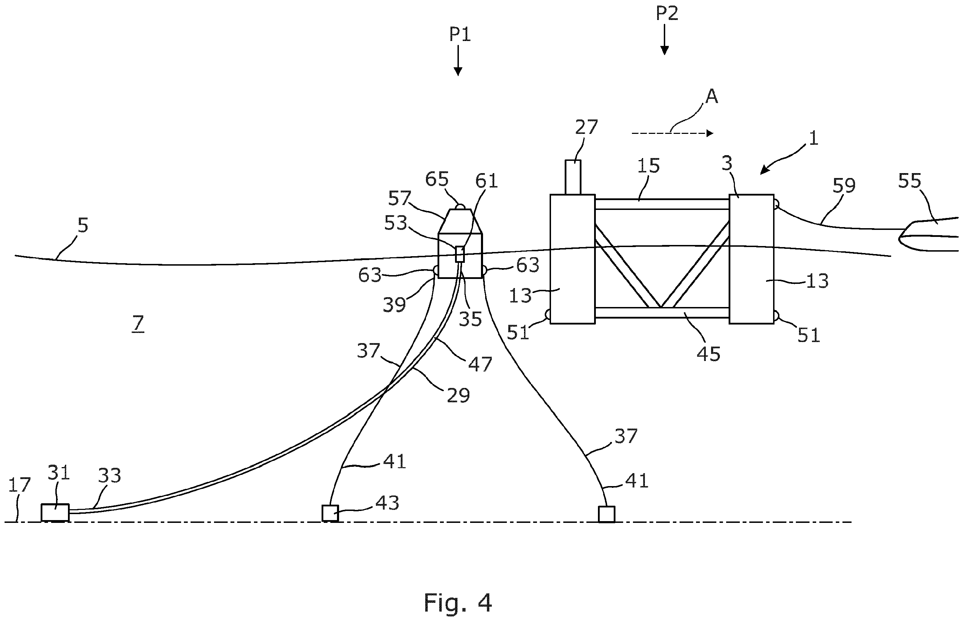

The energy converter device 1 may be positioned in a first position P1, which may be seen as the predefined position of the energy converter device 1 during normal operation of the energy converter device 1. When the energy converter device 1 is to be maintained, it may be advantageous to transport the energy converter device 1 from its first position P1 to a second position P2 (seen in Fig. 4), where the second position may be an intermediate position between position P1 and a maintenance site or may be positioned at the maintenance site. Thus, position P2 may be any position that is not the first position P1.

The disconnecting of the energy converter device 1 may include the disconnect of the first end 35 of the cable 29 from the connection junction 27, where first end 35 is releasably connected to a connecting arrangement 61 of the buoyancy body 57, so that the first end 35 is securely attached to the buoyancy body 57, when it has been disconnected from the connection junction 27 of the energy converter device 1, as seen in Fig. 4. The connecting arrangement 61 may be arranged in a dry part of the buoyancy body 57, so that when the first end 35 and/or the connector 53 are stored in a dry position when the buoyancy body 57 is positioned in or on the surface 5 of the body of water 7. By attaching the first end 35 of the cable 29 to the buoyancy body 57, the cable may be maintained in the first position P1 of the energy converter device 1, while the energy converter device 1 has been moved to a second position P2, as seen in Fig. 4. Thus, the positioning of the first end 35 allows the electric cable 29 and the first end 35 to be easily retrieved from the body of water and/or the buoyancy body by hoisting the buoyancy body 57 from the surface 5 of the body of water 7 and onto the platform 3 and/or the marine vessel 55 to reconnect the cable 29 to the connecting junction 27.

Furthermore, the mooring lines 37 providing fixation of the energy converter device in its first position P1 may be released (disconnected) from the connecting parts 51 of the platform 3 and may be releasably attached to mooring connecting parts 63 of the buoyancy body 57, so that the first end 39 of the mooring line 37 is releasably attached to the buoyancy body 57, thereby maintaining the buoyancy body in the first position P1 of the energy converter device 1, while the energy converter device 1 is in its second position P2, as seen in Fig. 4.

In Fig. 4, it may be seen that the energy converter device 1 and/or the platform 3 has been moved from its first position P1 to a second position P2 by towing the device 1 or the platform 3 from position P1 to position P2 in the direction of arrow A. Furthermore, it is shown that the first end 35 of the cable is connected to the buoyancy body 57 and the first end 39 of the mooring lines 37 is connected to the buoyancy body 57, so that the parts that were disconnected from the energy converter device 1 are being held in the first position P1 while the energy converter device 1 is being towed away.

When maintenance of the energy converter device 1 has been concluded in a second position P2, the energy converter device may be towed back to its first position P1, and the buoyancy body may be hoisted from the surface of the water using a hoisting connection 65 to the marine vessel 55 or the platform 3, and the first end 35 of the cable 29 may be disconnected from the buoyancy body 57 and reconnected to the connection junction 27, as seen in Fig. 3. Furthermore, the first end 39 of the mooring lines may further be disconnected from the buoyancy body 57 and connected to the platform 3, as seen in Fig. 3, the energy converter device 1 being maintained in its first position P1 (as seen in Fig. 3) and having been reconnected to the energy grid via the cable 29 and anchored in its position via the mooring lines 37.

Following the reconnection of the energy converter device 1 to the cable 29 and the mooring lines 37 and maintaining the energy converter device 1 in its first position P1, as seen in Fig. 2 and 3, the buoyancy body 57 may be hoisted or transported onto the marine vessel 55, and the buoyancy body 57 may be brought ashore for inspection and/or maintenance or may be transported towards a second energy converter device for allowing the disconnecting of the second energy converter device and maintenance of the second energy device in an onshore position and/or in a harbour. Thus, the buoyancy body 57 may be reused for other energy converter devices and may be brought in a temporary situation to allow an easy disconnection and reconnection of offshore energy converter devices.

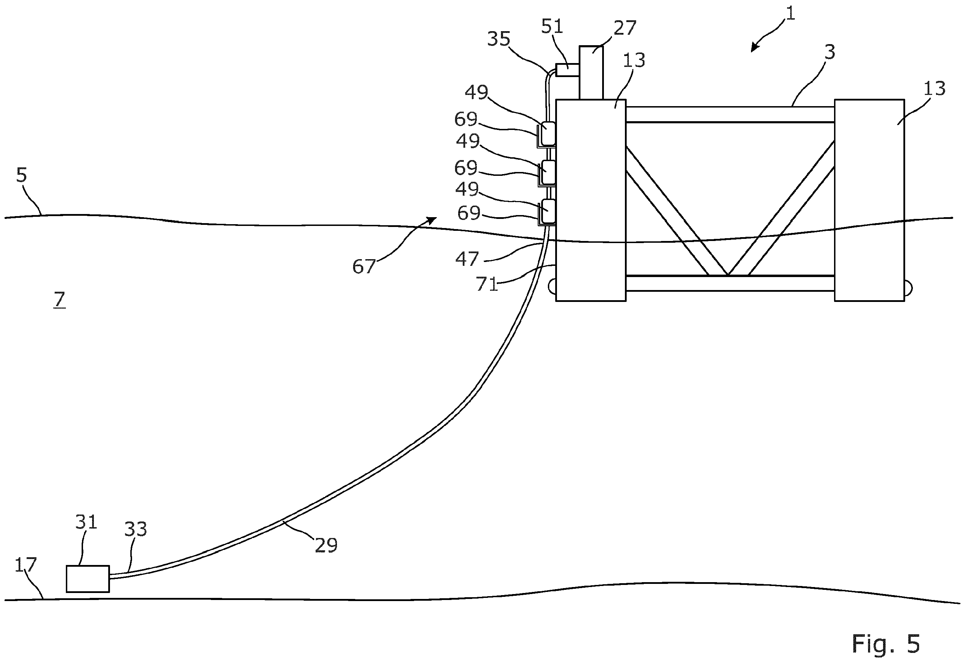

Fig. 5 shows a schematic side view of an electric cable connection assembly 67 for an offshore energy converter device 1, where the electric cable connection assembly 67 may comprise one or more buoyancy devices 49 attached to a body 47 of a cable 29 in the vicinity of the first end 35 of the cable 29. The electric cable connection assembly 67 may further comprise one or more fixation brackets 69, which may be connected to a side 71 of a platform 3 and/or a pontoon 13, where each fixation bracket 69 may be configured to receive a buoyancy device 49 and may be configured to support the buoyancy device 49 from below, thereby taking up any gravitational force of the cable 29 and thereby allowing the platform 3 and/or the bracket 69 to insulate the first end 35 of the cable 29 from the gravitational force of the cable below the buoyancy device. Thus, the connecting of the first end 35 of the electric cable 29 may be done subsequent to the fixation of the cable 29 by the electric cable connection assembly 67 without the entire gravitational force of the cable influencing the connecting of the first end 35 of the cable 29 to the connection junction, thereby also insulating the connection junction 27 and the first end 35 from any gravitational force or other force applied to the submerged cable, the force may be absorbed by the platform 3 or the pontoon 13 without being transmitted towards the first end 35.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Energy converter device
- 3: Platform
- 5: Water surface
- 7: Body of water
- 9: Wind turbine
- 11: Tower
- 13: Pontoon
- 15: Gangway
- 17: Seabed
- 19: Upper part of platform/pontoon
- 21: Lower part of platform/pontoon
- 23: Energy converter
- 25: Electric transmission part
- 27: Connection junction
- 29: Electric/data cable
- 31: Submerged electric junction
- 33: Second end of cable
- 35: First end of cable
- 37: Mooring line
- 39: First end of mooring line
- 41: Second end of mooring line
- 43: Anchoring device
- 45: Bracing
- 47: Body of cable
- 49: Buoyancy device
- 51: Connecting part
- 53: Cable connector
- 55: Marine vessel
- 57: Buoyancy body
- 59: Towing line
- 61: Connecting arrangement
- 63: Connecting part
- 65: Hoisting connection
- 67: Electric cable connection assembly
- 69: Fixation bracket
- 71: Side wall of platform/pontoon
- P1: First position
- P2: Second position
- A: Direction of towing

## Claims

1. A temporary floating connection assembly for disconnecting and storing a part of a power and data cable of at least one offshore energy converter device, the connection assembly comprising:
- a buoyancy body configured to float on a surface of a body of water (where a top part is above the surface of the body water and a bottom part below the surface of the body of water)
- a cable configured to providing power communication and data communication for the offshore energy converter, the cable having a first part configured to be connected to the offshore energy converter device and a second end configured to be submerged in the body of water,
- a first connection arrangement for the electric cable, where the connection arrangement in a first state is configured to secure a first end of the cable to the buoyancy body, and in a second state is configured to release the first end of the cable from the buoyancy body.

2. A temporary floating connection assembly in accordance with claim 1, wherein the electric cable comprises at least one connector, the connector being configured to a mating connection on the offshore energy converter device.

3. A temporary floating connection assembly in accordance with any of the preceding claims, wherein the buoyancy body comprises at least one hoisting connection.

4. A temporary floating connection assembly in accordance with any of the preceding claims, wherein the first end of the cable is positioned above the surface of the body of water in the first state.

5. A temporary floating connection assembly in accordance with any of the preceding claims, wherein the connection assembly comprises a second connection arrangement for at least one mooring line, where in a first state the at least one mooring line is secured to the buoyancy body, and in a second state the mooring line is released from the buoyancy body.

6. A temporary floating connection assembly in accordance with any of the preceding claims, wherein the connection assembly comprises at least one mooring line.

7. A temporary floating connection assembly in accordance with any of the preceding claims, wherein the electric cable has a second end connected to a power grid.

8. A temporary floating connection assembly in accordance with any of the preceding claims, wherein the electric cable comprises one or more buoyancy devices arranged along the longitudinal extension of the cable in a position between a first end of the cable and a second end of the cable.

9. A method of disconnecting an offshore energy converter device having a first position in a body of water, the method comprising the steps of:
- providing a buoyancy body on the surface of a body of water in the vicinity of the offshore energy converter device,
- disconnecting a first end of a cable from the offshore energy converter device,
- connecting the first end of the cable to the buoyancy body,
- towing the offshore energy converter device away from its first position to a second position.

10. A method further comprising the step of towing the offshore energy converter device from its second position to its first position, and optionally disconnecting the first end of the cable from the buoyancy body, and connecting the first end of the cable to the offshore energy converter device.

11. A method according to claim 10, wherein the method further comprises the step of removing the buoyancy body from the surface of the body of water in the vicinity of the offshore energy converter device.

12. A method further comprising the step of disconnecting one or more mooring lines from the offshore energy converter device and connecting the one or more mooring lines to the buoyancy body, and optionally disconnecting the one or more mooring lines from the buoyancy body, and connecting the one or more mooring lines to the energy converter device.
